## Europäisches Patentamt
## European Patent Office
## Office européen des brevets

(19)

(11) Veröffentlichungsnummer: **0 001 221**
**B1**

(12)

# EUROPÄISCHE PATENTSCHRIFT

(45) Veröffentlichungstag der Patentschrift:
**09.02.83**

(51) Int. Cl.³: **B 23 K 37/00**

(21) Anmeldenummer: **78100745.5**

(22) Anmeldetag: **24.08.78**

(54) **Brenneranordnung für vollmechanische Schweissverfahren.**

(30) Priorität: **27.08.77 DE 2738692**

(43) Veröffentlichungstag der Anmeldung:
**04.04.79 Patentblatt 79/7**

(45) Bekanntmachung des Hinweises auf die Patenterteilung:
**09.02.83 Patentblatt 83/6**

(84) Benannte Vertragsstaaten:
**BE CH FR GB NL**

(56) Entgegenhaltungen:
**BE-A-483 179**
**DE-B-2 509 060**
**DE-C-446 450**
**DE-C-687 427**
**FR-A-1 545 866**
**US-A-1 694 567**

(73) Patentinhaber: **Linde Aktiengesellschaft,
Abraham-Lincoln-Strasse 21, D-6200 Wiesbaden (DE)**

(72) Erfinder: **Pomaska, Hans-Ulrich, Wiesenweg 3,
D-8044 Unterschleissheim (DE)**
Erfinder: **Haas, Burkhard, Wiesenweg 9,
D-8044 Unterschleissheim (DE)**
Erfinder: **Rampf, Herbert, Dülferstrasse 20a,
D-8000 München 45 (DE)**

(74) Vertreter: **Schaefer, Gerhard, Dr., Linde
Aktiengesellschaft Zentrale Patentabteilung,
D-8023 Höllriegelskreuth (DE)**

## Brenneranordnung für vollmechanische Schweißverfahren

Die Erfindung betrifft eine Brenneranordnung für vollmechanische Schweißverfahren mit einer Verstelleinrichtung, einer Führungsplatte und einem über eine Halterung, die an ner beweglich in einer kreisbogenförmigen Ku..se gelagerten Kulissenführung befestigt ist, mit der Führungsplatte verbundenen und zum vorg..e-henen Schweißpunkt gerichteten Brenner.

Änderungen der Brennerneigung gegen das Werkstück beeinflussen das Schweißergebnis, insbesondere die Einbrandtiefe und die Nahtformung. Beim »stechenden« Schweißen ist der Einbrand geringer als beim »schleppenden« Schweißen. In der »neutralen« Schweißstellung, bei der der Schweißbrenner senkrecht zur Werkstückoberfläche steht, ist eine mittlere Einbrandtiefe zu erreichen.

Bei bekannten Brennerhalterungen geschieht die Änderung der Brennerstellung über Spindeln oder Zahnstangen durch Lösen und Anziehen von Schraubverbindungen. Soll bei Neigungsänderungen des Schweißbrenners, z. B. beim Schweißen am Rohr, ein einwandfreies Schweißergebnis erreicht werden, dann darf der Schweißpunkt, d. h. der Berührungspunkt zwischen Drahtelektrode und Werkstück, nicht verändert werden.

Um nach einer Neigungsänderung des Brenners den Schweißpunkt mit herkömmlichen Verstelleinrichtungen wieder zu finden, müssen mehrere Korrekturen über Kreuzsupportverstellungen durchgeführt werden. Außerdem sind Schrauben zu lösen und wieder anzuziehen.

Eine bekannte Verstelleinrichtung dieser Art ist in der DE-A-2 426 017 beschrieben. Dort ist ein Brenner in einer Halterung gelagert, die in einer Befestigungsplatte geführt wird, wobei die Befestigungsplatte durch Schraubverbindungen mit einer an einer Sockelbefestigung angeordneten Lagerplatte verbunden ist. Mit der Lagerplatte können Neigungsveränderungen des Brenners vorgenommen werden. Dazu enthält die Lagerplatte ein erstes Gewindeloch und eine Gruppe anderer Gewindelöcher, die so angeordnet sind, daß die Brennerhalterung an der Lagerplatte mit verschiedenen Winkeleinstellungen zwischen dem ersten Gewindeloch in Verbindung mit einem der anderen Gewindelöcher befestigt werden kann.

Bei dieser Anordnung wandert der Schweißpunkt bei Neigungsänderungen des Brenners und eine Ausrichtung des geneigten Brenners auf den alten Schweißpunkt ist schwierig, ungenau und nur mit Zeitaufwand durchzuführen, da mehrere Schraubverbindungen zu lösen und anzuziehen sind, sowie die Brennerhalterung in der Befestigungsplatte bzw. die Lagerplatte in der Sockelbefestigung zu verschieben ist.

Durch die DE-B-2 509 060 ist eine Brennschneidmaschine bekannt, bei der Schneidbrenner in einer zur Schneidrichtung senkrechten Ebene verstellt werden können. Dabei ist ein Schneidbrenner aus der Senkrechten lediglich nach links, ein weiterer Schneidbrenner lediglich nach rechts in eine zur Senkrechten geneigte Position bewegbar, während ein dritter Schneidbrenner stets senkrecht zum Werkstück orientiert ist.

Durch die DE-C-446 450 ist eine Einstellvorrichtung für den Brenner von autogenen Schweißmaschinen bekannt, durch die der Brenner um seine Spitze als Drehpunkt verschwenkt werden kann. Dabei wandert der Schweißpukt bei Neigungsänderungen des Brenners. Zudem erlaubt diese bekannte Einstellvorrichtung lediglich »stechende« bzw. »schleppende« Einstellpositionen.

Der Erfindung liegt daher die Aufgabe zugrunde, eine Brenneranordnung zu schaffen, mit deren Hilfe die Neigung eines Schweißbrenners gegen das Werkstück schnell und ohne Änderung des Schweißpunktes in einem weiten Bereich verstellt werden kann.

Diese Aufgabe wird erfindungsgemäß dadurch gelöst, daß der Brenner in der Halterung so befestigt ist, daß die Spitze der Elektrode des Brenners bei Verschwenkung des Brenners in der parallel zur Schweißrichtung ausrichtbaren Führungsplatte in der Schwenkachse liegt und die kreisbogenförmige Kulisse so in der Führungsplatte angeordnet ist, daß die Neigung des Brenners gegen eine Senkrechte auf das Werkstück im Schweißpunkt zwischen einer Extremstellung in Schweißrichtung und einer Extremstellung entgegen der Schweißrichtung einstellbar ist.

Bei der erfindungsgemäßen Brenneranordnung wird eine Änderung der Brennerneigung in der Weise vorgenommen, daß die Kulissenführung und damit der mit dieser starr verbundene Schweißbrenner in dem durch die Kulisse gegebenen Rahmen soweit bewegt wird, bis o. r chweißbrenner die gewünschte Neigung ge.. .i das Werkstück angenommen hat. Dazu ist es lediglich erforderlich, eine Schraubverbindung, mit der die in der Kulisse beweglich gelagerte Kulissenführung an der Führungsplatte befestigt 'st, zu lösen und nach der Neigungsänderung wieder anzuziehen.

Da die Kulisse erfindungsgemäß kreisbogenförmig ausgebildet ist und der Brenner in der oben beschriebenen Art und Weise über die Kulissenführung hinausragt, ist der Schweißbrenner bei Änderungen seiner Neigung stets auf einen Punkt, den Schweißpunkt, ausgerichtet. Durch die erfindungsgemäße Brenneranordnung ist in vorteilhafter Weise eine Neigungsänderung des Brenners durch Lösen und Anziehen einer einzigen Schraubverbindung in kurzer Zeit möglich, ohne daß der Schweißpunkt wandert und eine entsprechende Korrektur an der Brenneranordnung unter Konstanthalten der Brennerneigung notwendig wäre.

Der Brennerschwenkbereich, also der maximale Winkelbereich, innerhalb dessen die Brennerneigung verändert werden kann, ist grundsätzlich ebenso beliebig wählbar, wie der mittlere Radius der kreisbogenförmigen Kulisse, der nur durch die maximale Länge des zur Befestigung in der Halterung geeigneten Brenners eingeschränkt ist.

Die erfindungsgemäße Brenneranordnung ist bei allen vollmechanischen Schweißverfahren, z. B. MAG-, MIG-, WIG-, Plasma- und Unterpulverschweißen verwendbar. Weiter ist diese Brenneranordnung zum Schweißen in allen Positionen für gerade, runde oder Konturenschweißnähte geeignet.

Bei vollmechanischen oder automatischen Schweißverfahren erfolgt die Steuerung des Schweißvorganges beispielsweise durch Endschalter, die in den Endlagen des Schweißbrenners angeordnet sind. Mit herkömmlichen Brenneranordnungen mußte bei einer Änderung der Brennerneigung und der damit veränderten Lage des Schweißpunktes auch die Position der Endschalter neu angepaßt werden. Durch die erfindungsgemäße Brenneranordnung erübrigt sich eine Korrektur der Schalter, da bei Änderung der Brennerneigung innerhalb des Brennerschwenkbereiches der Schweißpunkt nicht wandert.

Mit Vorteil weist die Verstelleinrichtung zwei zueinander senkrechte Achsen auf, um die die Verstelleinrichtung jeweils um 360° drehbar ist. Damit wird bezweckt, den Schweißbrenner nicht nur in einer zur Ebene der Führungsplatte parallelen Ebene schwenken sondern auch räumlich verstellen zu können. Das Feststellen der Brenneranordnung nach einer Drehung geschieht durch Anziehen von Schraubverbindungen, während diese zur Verstellung der Brenneranordnung gelöst werden müssen.

Zweckmäßigerweise liegt die eine Achse senkrecht zur Ebene der Führungsplatte und die zweite Achse in einer Ebene, die durch die erste Achse und den Schweißpunkt aufgespannt wird.

Für eine exakte und einfache Reproduzierbarkeit einer Brennereinstellung ist sowohl der Kulisse als auch jeder Achse eine Skala zugeordnet.

Mit Hilfe dieser Ausgestaltung des Erfindungsgedankens können alle Dreh- bzw. Schwenkbewegungen des Brenners über die Skaleneinteilung verfolgt und festgehalten werden. Die exakte Verstellung über Skalen bedeutet, daß jede räumliche Neigung des Brenners jederzeit zeitsparend und ohne umständliches Messen wiederholt werden kann. Die genaue Reproduzierbarkeit garantiert darüber hinaus eine gleichbleibende Qualität der Schweißnaht.

Die Erfindung soll nun anhand eines in einer Skizze schematisch dargestellten Ausführungsbeispieles erläuert werden.

Bei einer erfindungsgemäßen Brenneranordnung ist ein Brenner 7 über eine Halterung 3 mit einer Kulissenführung 9 verbunden. In einer Führungsplatte 14 ist eine kreisbogenförmige Kulisse 2 ausgespart, in der die Kulissenführung 9 beweglich gelagert und an der Führungsplatte 14 mit einer nicht dargestellten Schraubverbindung befestigt ist. Zur Änderung der Brennerneigung gegenüber dem zu schweißenden Werkstück 15 wird diese Schraubverbindung gelöst, die Kulissenführung in dem durch die Kulisse vorgegebenen Rahmen verschoben und die Schraubverbindung wieder angezogen. Der Brennerschwenkbereich 4, also der maximale Bereich, innerhalb dessen die Brennerneigung variiert werden kann, ist durch die Länge der Kulisse 2 festgelegt. Auf der Führungsplatte 14 ist konzentrisch zur Kulisse 2 eine Skala 10 eingeprägt, die beispielsweise in Grad geeicht sein kann. Jede Neigung des Brenners ist damit eindeutig zu beschreiben und jederzeit reproduzierbar. Zur richtigen Lagerung des Schweißbrenners 7 in der Halterung 3 weist diese eine Meßmarke 6 auf, die mit einer nicht dargestellten Meßmarke auf dem Brenner 7 zur Deckung gebracht werden muß. Ist der Schweißbrenner in der beschriebenen Weise justiert worden, so besitzt der über die Kulisse 2 hinausragende Teil des Brenners die erfindungsgemäß vorgeschriebene Länge, die gleich dem mittleren Radius 5 der Kulisse 2 sein soll.

Bei Änderung der Brennerneigung bleibt nun die das Werkstück 15 berührende Spitze der Elektrode 8, d. h. der Schweißpunkt 1, unverändert an einem Ort.

Die Brenneranordnung ist um eine auf der Führungsplatte 14 senkrecht stehende Achse 12 sowie um eine weitere, zu dieser Achse senkrecht stehende Achse 11, die in der durch die Achse 12 und den Schweißpunkt aufgespannten Ebene liegt, jeweils um 360° drehbar. Beiden Achsen 11, 12 sind Skalen zugeordnet, wobei in der Skizze nur die der Achse 11 zugeordnete Skala 13 dargestellt ist. Mit diesen Skalen kann die Position des Schweißbrenners 7 nach einer Drehung eindeutig beschrieben und reproduziert werden.

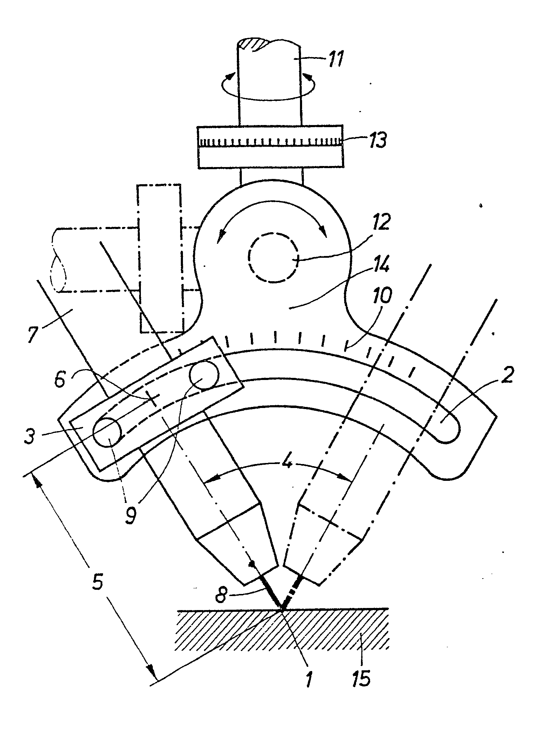

**Patentansprüche**

1. Brenneranordnung für vollmechanische Schweißverfahren mit einer Verstelleinrichtung, einer Führungsplatte (14) und einem über eine Halterung (3), die an einer beweglich in einer kreisbogenförmigen Kulisse (2) gelagerten Kulissenführung (9) befestigt ist, mit der Führungsplatte verbundenen und zum vorgesehenen Schweißpunkt (1) gerichteten Brenner (7), dadurch gekennzeichnet, daß der Brenner (7) in der Halterung (3) so befestigt ist, daß die Spitze der Elektrode (8) des Brenners (7) bei Verschwenkung des Brenners (7) in der parallel zur Schweißrichtung ausrichtbaren Führungsplatte (14) in der Schwenkachse liegt und die kreisbogenförmige Kulisse (2) so in der Führungsplatte (14) angeordnet ist, daß die Neigung des Brenners (7) gegen eine Senkrechte auf das Werkstück im Schweißpunkt (1) zwischen einer Extremstellung in Schweißrichtung und einer Extremstellung entgegen der Schweißrichtung einstellbar ist.

2. Brenneranordnung nach Anspruch 1, dadurch gekennzeichnet, daß die Verstelleinrichtung zwei zueinander senkrechte Achsen (11, 12) aufweist, um die die Verstelleinrichtung jeweils um 360° drehbar ist.

3. Brenneranordnung nach Anspruch 2, dadurch gekennzeichnet, daß die eine Achse (12) senkrecht zur Ebene der Führungsplatte (14) liegt und die zweite Achse (11) in einer Ebene liegt, die durch die erste Achse (12) und den Schweißpunkt (1) aufgespannt wird.

4. Brenneranordnung nach einem der Ansprüche 1 bis 3, dadurch gekennzeichnet, daß der Kulisse (2) und jeder Achse (11, 12) eine Skala (10, 13) zugeordnet ist.

## Claims

1. A burner arrangement for fully automatic welding processes comprising an adjusting device, a guide plate (14) and a burner (7) which is directed towards the intended welding point (1) and is connected to the guide plate by means of a holder (3) which is secured to a sliding guide (9) movably located in an arcuate channel, characterised in that the burner (7) is so secured to the holder (3) that when the burner (7) is swivelled in the guide plate (14), which can be aligned parallel to the welding direction, the tip of the electrode (8) of the burner (7) lies in the swivel axis, and the arcuate channel (2) is so arranged in the guide plate (14) that the inclination of the burner (7) with respect to a perpendicular to the workpiece at the welding point (1), is adjustable between an extreme position in the welding direction and an extreme position in the direction opposite to the welding direction.

2. A burner arrangement according to Claim 1, characterised in that the adjusting device possesses two axes (11, 12) which are perpendicular to one another and about which the adjusting device can in each case be rotated through 360°.

3. A burner arrangement according to Claim 2, characterised in that one of said axes (12) is perpendicular to the plane of the guide plate (14) and the second axis (11) is arranged in a plane which is defined by the first axis (12) and the welding point (1).

4. A burner arrangement according to one of Claim 1 to 3, characterised in that the channel (2) each axis (11, 12) is assigned a scale (10, 13).

## Revendications

1. Agencement de chalumeau pour un procédé de soudage complètement mécanisé, comportant un dispositif d'actionnement, et une plaque de guidage (14) et un chalumeau (7) relié à la plaque de guidage par l'intermédiaire d'un support (3), qui est fixé sur un guide à coulisse (9) monté de façon mobile dans une coulisse (2) en forme d'arc de cercle et dirigé vers un point de soudage (1) prévu, caractérisé en ce que le chalumeau (7) est fixé dans le support (3) de telle sorte que la pointe de l'électrode (8) du chalumeau (7) soit placée, lors d'un pivotement du chalumeau (7) dans la plaque de guidage (14) pouvant être orientée parallèlement à la direction de soudage, sur l'axe de pivotement et en ce que la coulisse (2), en forme d'arc de cercle, est disposée dans la plaque de guidage (14) de telle sorte que l'inclinaison du chalumeau (7) par rapport à une verticale puisse être réglée sur la pièce au point de soudage (1) entre une position extrême dans la direction de soudage et une position extrême dans un sens opposé à la direction de soudage.

2. Agencement de chalumeau selon la revendication 1, caractérisé en ce que ledit dispositif d'actionnement comporte deux axes (11, 12) mutuellement perpendiculaires et autour duquel le dispositif d'actionnement peut, à chaque fois, tourner de 360°.

3. Agencement de chalumeau selon la revendication 2, caractérisé en ce que l'un des axes (12) est orienté perpendiculairement au plan de la plaque de guidage (14) et en ce que le second axe (11) est placé dans un plan qui passe par l'axe (12) et le point de soudage (1).

4. Agencement de chalumeau selon l'une des revendications 1 à 3, caractérisé en ce qu'une échelle (10, 13) est associée à la coulisse (2) et chaque axe (11, 12).